# EUROPÄISCHE PATENTSCHRIFT

(11) **EP 4 477 078 B1**
(45) Veröffentlichungstag und Bekanntmachung des Hinweises auf die Patenterteilung: **08.04.2026**
(21) Anmeldenummer: 23179781.2
(22) Anmeldetag: 16.06.2023
(51) Int. Cl.: A01K 13/00

(54) **TIERDECKE MIT SCHUTZSCHICHT**
ANIMAL COVER WITH PROTECTIVE LAYER
COUVERTURE POUR ANIMAUX AVEC COUCHE PROTECTRICE

(43) Veröffentlichungstag der Anmeldung: 18.12.2024
(73) Patentinhaber: Waldhausen GmbH & Co. KG, 50829 Köln (DE)
(72) Erfinder: Manefeld, Michael, 72336 Balingen (DE)
(74) Vertreter: Patentanwälte Bauer Vorberg Kayser

(56) Entgegenhaltungen:
- DE-U1- 202008 007 770
- US-A1- 2022 378 016
- US-B1- 6 467 244

## Beschreibung

Die vorliegende Erfindung betrifft eine Tierdecke zur Anordnung auf oder an einem Tier, die eine Oberseite und eine dem Tier während der Benutzung der Tierdecke zugewandte Unterseite aufweist. Weiterhin betrifft die Erfindung ein Verfahren zur Herstellung, Auslieferung und ersten Anprobe einer solchen Tierdecke.

Eine Tierdecke kann beispielsweise eine Satteldecke, Sattelunterlage oder Schabracke für Pferde sein, aber auch eine Hunde- oder Katzendecke.

Eine Satteldecke ist eine spezielle Decke, die unter dem Sattel platziert wird, um den Rücken des Pferdes zu schützen und Komfort zu bieten. Sie dient in erster Linie dazu, den Rücken des Pferdes vor Reibung und Druckstellen zu schützen, die durch den Sattel verursacht werden könnten. Sie bietet auch eine zusätzliche Polsterungsschicht zwischen dem Pferderücken und dem Sattel, um den Druck zu verteilen und Reibung zu minimieren. Satteldecken sind oft mit einer Polsterung oder einem speziellen Material ausgestattet, das dazu beiträgt, Stöße zu absorbieren und die Auswirkungen des Reitens auf den Rücken des Pferdes zu verringern.

Satteldecken bestehen in der Regel aus atmungsaktiven Materialien wie Baumwolle oder synthetischen Stoffen. Dies hilft, Überhitzung und Schweißbildung zu reduzieren und den Rücken des Pferdes trocken zu halten.

Eine gute Satteldecke sollte eine passende Größe und Form aufweisen, um zum Sattel und zur Anatomie des Pferdes zu passen. Sie sollte den Sattel gut abdecken und über den Widerrist des Pferdes reichen, um einen optimalen Schutz zu gewährleisten. Es gibt spezielle Dressur-Satteldecken, Spring-Satteldecken, Western-Satteldecken und vieles mehr, die sich in Form und Ausbildung voneinander unterscheiden, jede Disziplin hat ihre eigenen Anforderungen an die Satteldecke.

Die Druckschrift DE 20 2008 007 770 U1 offenbart eine Satteldecke, die aus zwei Schichten besteht, wobei die den Pferderücken kontaktierende Schicht, die vorzugsweise aus Mikrofas er gebildet ist, dafür vorgesehen ist, während des Reitens Feuchtigkeit und Schweiß aufzunehmen.

Aufgrund der beschriebenen Anforderungen ist es oftmals notwendig, verschiedene Satteldecken unterschiedlicher Form und Größe vor dem Kauf bzw. der endgültigen Benutzung auf das Pferd aufzulegen, um die Passform überprüfen zu können. Nur eine optimale Passform führt zum gewünschten Ergebnis. Problematisch ist jedoch, dass die Satteldecke dabei mit ihrer Unterseite mit dem Pferd in Kontakt kommt, wodurch nach dem Abnehmen Haare und gegebenenfalls Verschmutzungen an der Satteldecke verbleiben können. Dies kann im ungünstigsten Fall dazu führen, dass eine nicht optimal passende Satteldecke nach Rückgabe durch den Käufer oder Benutzer an den Hersteller oder Händler zunächst aufwändig gereinigt werden muss, bevor sie erneut in den Verkauf gelangen kann.

Das gleiche gilt beispielsweise für sogenannte Pferde- oder Hundedecken oder - jacken, die unter anderem die Tiere im Winter warmhalten oder zum Beispiel im Sommer vor Fliegen schützen sollen. Auch diese müssen in ihrer Größe und Form an das Tier angepasst sein und werden aus den gleichen Gründen zunächst im Rahmen einer Anprobe getestet, bevor sie endgültig gekauft werden. Nicht passende Pferde- oder Hundedecken oder -jacken werden dagegen an den Händler oder Hersteller zurückgegeben und müssen gegebenenfalls von diesem gereinigt werden.

Die Reinigung und/oder die Wiederaufbereitung der Tierdecken oder Hundedecken oder -jacken ist aufwändig und mit Kosten verbunden. Dies ist insbesondere dann der Fall, wenn bei der Anprobe Tierhaare an der Tierdecke verblieben sind. Diese zu entfernen ist schwierig und in der Regel nur manuell möglich.

Die Aufgabe der Erfindung besteht darin, eine Tierdecke vorzuschlagen, die diese Nachteile möglichst weitgehend vermeidet. Weiterhin besteht die Aufgabe der Erfindung darin, ein Verfahren vorzuschlagen, welches die oben genannten Nachteile vermeidet oder zumindest vermindert. Weiterhin ist es Aufgabe der Erfindung eine vorteilhafte Verwendung einer Tierdecke zur Vermeidung der genannten Nachteile anzugeben.

Erfindungsgemäß wird die Aufgabe durch eine Tierdecken mit den Merkmalen des unabhängigen Patentanspruchs 1, ein Verfahren mit den Verfahrensschritten gemäß dem unabhängigen Patentanspruch 8 gelöst und eine Verwendung einer Tierdecke gemäß Patentanspruch 10 gelöst.

Erfindungsgemäß wird die Aufgabe durch eine Tierdecke gelöst, die selbst aus einem ersten Material gefertigt ist und vor ihrer ersten Benutzung an ihrer Unterseite eine lösbare Schutzschicht aus einem zweiten Material aufweist. Die Schutzschicht ist derart ausgeführt und angeordnet, dass diese bei einem Erstkontakt der Tierdecke mit dem Tier zwischen der Tierdecke und dem Tier angeordnet und vor der bestimmungsgemäßen Verwendung der Tierdecke zu entfernen ist.

Es wird darauf hingewiesen, dass der Begriff Tierdecke erfindungsgemäß nicht nur auf Decken im wörtlichen Sinne bezogen ist, sondern sich auch auf andere flächige Produkte bezieht, die Bereiche eines Tieres abdecken, also bei Benutzung mit dem Tier in Kontakt kommen. Dies können auch die bereits genannten Tierdecken oder -jacken, aber beispielsweise auch Beinschoner für Pferde sein.

Die Kernidee der vorliegenden Erfindung besteht also darin, den Kontakt der Unterseite der Tierdecke mit dem Tier bei der ersten Anprobe zu vermeiden. Die Tierdecke wird deshalb mit einer lösbaren Schutzschicht auf der Unterseite ausgestattet und ausgeliefert, die statt der Unterseite mit dem Tier in Kontakt kommt und ein Verschmutzen der eigentlichen Tierdecke verhindert. Wesentlich ist, dass diese Schutzschicht problemlos von der Tierdecke entfernbar ist, also nicht mit dieser beispielsweise fest verklebt ist. Stellt sich bei der Anprobe heraus, dass die Tierdecke die passende Form und Größe aufweist, kann der Benutzer die Tierdecke wieder vom Tier herunternehmen, die Schutzschicht entfernen und die Tierdecke zur endgültigen Benutzung wieder auf das Tier auflegen.

Sollte die Tierdecke dagegen nicht optimal zum Tier passen, beispielsweise aus geometrischen oder optischen Gründen, kann diese mitsamt der daran weiterhin befestigten Schutzschicht zurück an den Hersteller oder Händler gegeben werden. Dieser kann die Schutzschicht bei Bedarf schnell und einfach entfernen und die Tierdecke ohne Schutzschicht erneut in den Verkauf geben. Alternativ ist es auch möglich, die gegebenenfalls verschmutzte Schutzschicht zu entfernen und durch eine erneute Schutzschicht zu ersetzen. Dieser Vorgang ist ebenfalls schneller und einfacher durchzuführen als eine Reinigung der Tierdecke, insbesondere das aufwändige Entfernen von Tierhaaren. Schließlich ist es auch möglich, die verunreinigte Schutzschicht zu reinigen. Da diese eine andere, vorzugsweise glattere Oberfläche als die eigentliche Unterseite der Tierdecke aufweist, ist das Reinigen schneller und mit weniger Aufwand durchführbar, insbesondere weil sich Tierhaare weniger stark mit der Schutzschicht verhaken.

Die Schutzschicht kann durch verschiedene Materialien gebildet sein, wobei sich insbesondere ein Folienmaterial anbietet. Eine solche Folie kann beispielsweise einseitig mit einem Klebstoff versehen sein, der eine ausreichende Verbindung mit der Tierdecke ermöglicht, aber trotzdem eine rückstandsfreie Trennung der Schutzschicht von der Tierdecke gewährleistet. In einer besonders vorteilhaften Ausführungsvariante wird auf die Verwendung von Klebstoff verzichtet und ein Folienmaterial verwendet, dass alleine aufgrund von Adhäsion bzw. statischer Haftung mit der Tierdecke verbunden bleibt. Voraussetzung hierfür ist unter anderem, dass auch das Material der Tierdecke selbst für eine solche Verbindung geeignet ist. Dies kann dadurch gegeben sein, dass die gesamte Tierdecke dafür geeignet ist, alternativ ist es aber auch möglich, nur bestimmte Bereiche der Tierdecke für eine solche Haftung auszubilden und vorzusehen. Beispielsweise können Bereiche am Rand der der Unterseite und ihrer Fläche vorgesehen sein, die ausreichend glatt ausgebildet sind und die Schutzfolie halten. Solche Bereiche können beispielsweise jeweils eine Größe von 4 cm² bis 40 cm², vorzugsweise etwa 10-20 cm² aufweisen.

Anstelle einer Schutzschicht aus einem Folienmaterial können auch andere Materialien zur Ausbildung der Schutzschicht verwendet werden. Beispielsweise ist eine Schutzschicht aus einem relativ dünnen Stoff oder Vlies oder auch einem starken, widerstandsfähigen Papier ebenfalls geeignet.

Die Verbindung mit der Tierdecke ist auch nicht auf eine Klebeverbindung beschränkt, insbesondere kann sich beispielsweise bei der Verwendung von Stoffen oder Vliesen auch eine Nähverbindung als vorteilhaft erweisen. Die Schutzschicht wird in diesem Fall vor dem Ausliefern der Tierdecke mit möglichst wenigen Stichen mit der Tierdecke vernäht, sodass diese einerseits gehalten, aber auch einfach entfernbar ist. Dabei ist es für die meisten Anwendungen unerheblich, ob die für die Verbindung verwendete Nähfäden nach Entfernen der Schutzschicht in der Tierdecke verbleiben.

Die Verbindung zwischen der Schutzschicht und der Tierdecke kann auch durch eine Klettverbindung erfolgen. In diesem Fall sind an der Unterseite der Tierdecke Bereiche vorgesehen, die mit entsprechenden Bereichen der Schutzschicht eine Klettverbindung eingehen. Vorteilhafterweise weist die Schutzschicht zu diesem Zweck über ihre Fläche verteilt mehrere Bereiche mit Haken auf, während die Unterseite der Tierdecke damit korrespondierende Bereiche mit Schlaufen aufweist. Dies ist deswegen vorteilhaft, weil nach Entfernen der Schutzschicht und anschließender bestimmungsgemäßer Benutzung der Tierdecke die verbleibenden Schlaufen und nicht die relativ rauen Hakenbereiche mit dem Tier in Kontakt kommen, was für das Tier angenehmer ist. Die für die Klettverbindung notwendigen Bereiche an der Tierdecke und der Schutzschicht sind vorzugsweise deren Randbereichen und ggfs. auch im mittleren, zentralen Bereich der Grundfläche der Unterseite vorgesehen.

Alternativ kann die Unterseite der Tierdecke auch derart ausgeführt sein, dass die gesamte Unterseite selbst die Schlaufen ausbildet. Auf besondere Bereiche mit Schlaufen kann dann verzichtet werden.

In einer etwas aufwändigeren Ausführungsvariante ist es auch möglich, die Verbindung zwischen Schutzschicht und Tierdecke durch eine Klemmverbindung, beispielsweise durch Druckknöpfe zu gewährleisten.

Für alle für die Schutzschicht verwendeten Materialien gilt, dass diese bei Verformung oder Berührung möglichst wenig Geräusch verursachen sollten. Es hat sich gezeigt, dass Tiere, insbesondere Pferde, insbesondere auf Raschel- oder Knistergeräusche reagieren. Dies ist insbesondere bei der Verwendung eines Folienmaterials wichtig, weswegen sich insbesondere weiche Folien, beispielsweise aus Weich-PVC oder flexibilisierten PVC (polymer-weichgemachtes PVC) besonders eignen. Diese bestehen in der Regel aus einfachem monomer weich gemachtem PVC. Besonders vorteilhaft ist darüber hinaus auch, dass sich Folien aus Weich-PVC oder flexibilisierten PVC relativ gut mit Nadel, Faden und Nähmaschine oder mit Kunststoff- und Metallnieten verarbeiten bzw. verbinden lassen.

Die Schutzschicht kann grundsätzlich die gesamte Unterseite der Tierdecke bedecken, sie kann sich aber auch nur auf ausgewählte Bereiche, vorzugsweise die am ehesten unmittelbar mit dem Tier in Kontakt kommenden, beschränken.

Ein erfindungsgemäßes Verfahren zur Herstellung, Auslieferung und ersten Anprobe einer Tierdecke weist die nachfolgenden Verfahrensschritte auf:
- Herstellen einer Tierdecke aus einem ersten Material,
- Herstellen einer Schutzschicht aus einer Folie,
- Lösbares Befestigen der Schutzschicht an einer dem Tier während der Benutzung der Tierdecke zugewandten Unterseite der Tierdecke,
- Ausliefern der Tierdecke an einen Kunden,
- Auflegen der Tierdecke auf das Tier, wobei die Schutzschicht zwischen der Tierdecke und dem Tier angeordnet ist,
- Abnehmen der Tierdecke vom Tier,
- Lösen der Schutzschicht von der Tierdecke
dann entweder
- Lösen der Schutzschicht (26) von der Tierdecke (20) und bestimmungsgemäße Benutzung der Tierdecke (20) mit dem Tier, oder
- Rückgabe der Tierdecke (20) an den Hersteller oder Händler der Tierdecke (20) vor dem Lösen der Schutzschicht (26).

Wie bereits ausgeführt, kann die Schutzschicht an der Tierdecke verbleiben, falls diese zum Hersteller oder Händler zurückgegeben werden sollte. Dieser kann diese entfernen und/oder ersetzen. Wesentlich ist, dass die Schutzfolie nicht während der bestimmungsgemäßen Benutzung der Tierdecke an dieser verbleibt.

Die Erfindung wird anhand der nachfolgenden Figuren näher erläutert. Die Figuren sind lediglich Prinzipdarstellungen und insbesondere teilweise nicht maßstabsgetreu. Sie sollen den Schutzbereich der Erfindung nicht beschränken, sie dienen lediglich der Erläuterung der Erfindung. Es zeigen:
- Figur 1:: eine erfindungsgemäße Schabracke von unten,
- Figur 2:: die Schabracke aus Figur 1 in perspektivischer Darstellung von der Seite,
- Figur 3:: eine erfindungsgemäße Tierdecke bzw. -jacke von der Seite,
- Figur 4:: die Tierdecke bzw. -jacke aus Figur 3 aufgeklappt von unten.

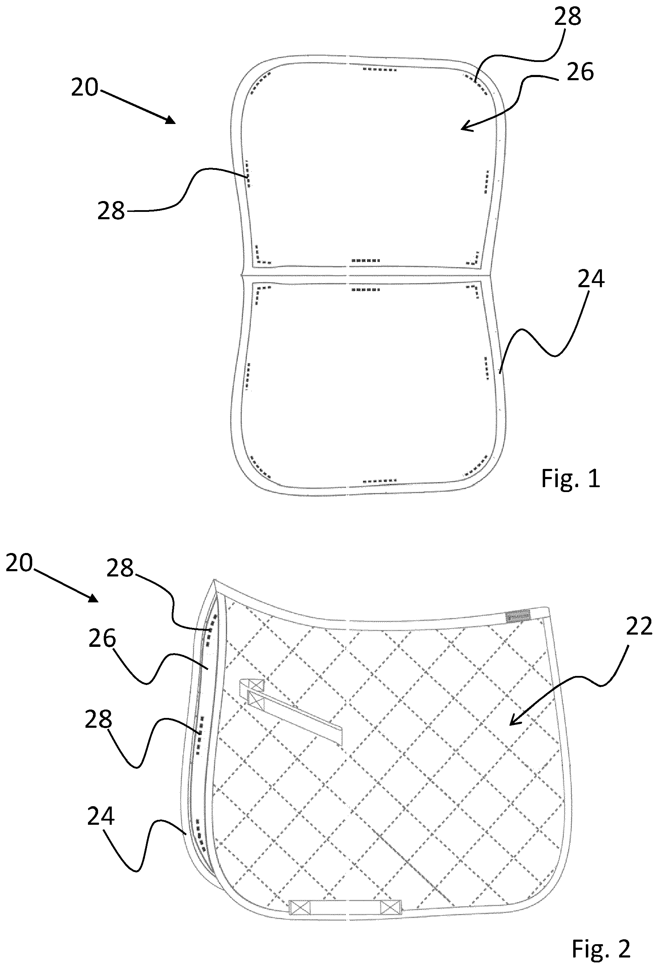

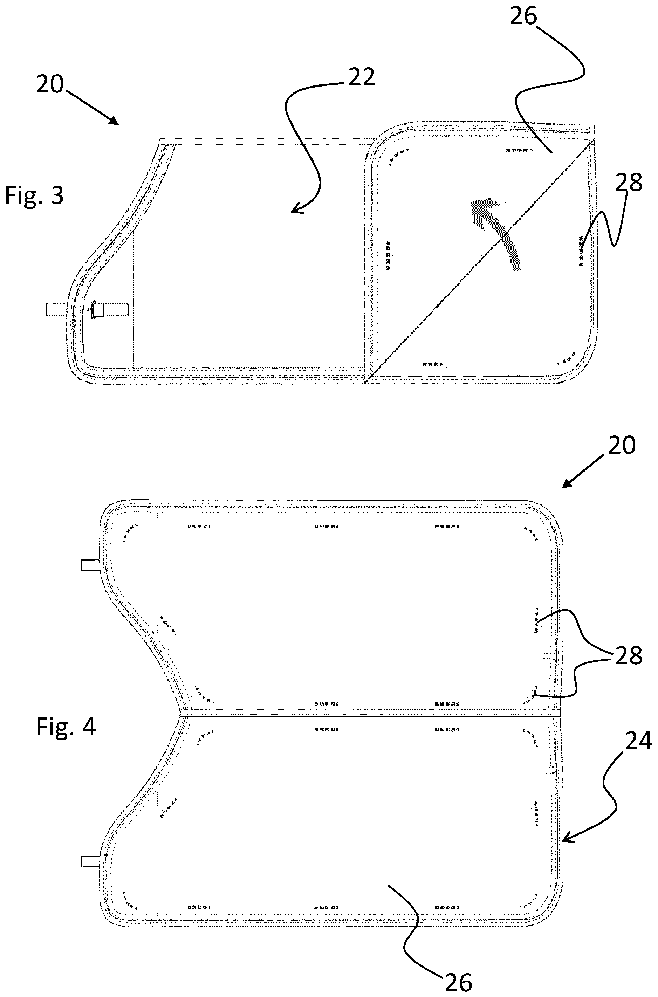

Die Figuren 1 bis 4 zeigen eine erfindungsgemäße Tierdecke 20 aus verschiedenen Blickrichtungen, die Figuren 1 und 2 eine Ausführung als Schabracke, die Figuren 3 und 4 eine Ausführung als Tierdecke bzw. -jacke. Erkennbar sind jeweils eine Oberseite 22 und eine dem Tier während der Benutzung der Tierdecke 20 zugewandte Unterseite 24.

Die Tierdecke 20 ist aus einem ersten Material gefertigt und ist auf ihrer Unterseite 24 mit einer lösbaren Schutzschicht 26 verbunden. Im gezeigten Ausführungsbeispiel sind zwei Bereiche der Unterseite 24 der Tierdecke 20 jeweils mit einer Schutzschicht 26 bedeckt, alternativ können auch mehrere unterschiedliche Bereiche mit jeweils einer Schutzschicht 26 bedeckt sein, insbesondere kann sich die Schutzschicht 26 auch über nahezu den gesamten Bereich der Unterseite 24 erstrecken, also im mittleren Verlauf nicht unterbrochen sein.

Die erfindungsgemäße Schutzschicht 26 kann mit der Unterseite 24 verklebt sein, gezeigt ist aber eine Ausführungsvariante mit einer Nähverbindung. Erkennbar sind mehrere Nähte 28, über die die jeweiligen Schutzschichten 26 mit der Tierdecke 20 verbunden sind. Im gezeigten Ausführungsbeispiel verlaufen die Nähte 28 im Randbereich der Unterseite 24 der Tierdecke 20.diese Anordnung ist jedoch nur beispielhaft zu verstehen, insbesondere können auch im Flächenbereich, also im Wesentlichen mittig, weitere Nähte 28 vorgesehen sein.

Figur 2 verdeutlicht, wie die Satteldecke auf ein nicht gezeigtes Pferd aufgelegt wird. Erkennbar ist, dass nicht die Unterseite 24, sondern im Wesentlichen die daran befestigten Schutzschichten 26 mit einem Pferderücken in Kontakt kommen. Sollte die Tierdecke 20 in ihrer Form und Farbe zu dem Pferd passen, kann die Schutzschicht 26 schnell und einfach entfernt und die Tierdecke 20 bestimmungsgemäß verwendet werden. Andernfalls kann die Tierdecke 20 bzw. die Schutzschicht 26 schnell und einfach gereinigt oder ausgetauscht werden. Das Gleiche gilt für die in den Figuren 3 und 4 gezeigte Tierdecke bzw. -jacke

Die Erfindung ist nicht auf das gezeigte Ausführungsbeispiel beschränkt, sondern umfasst auch weitere Ausführungsvarianten, die sich die Erfindung zunutze machen.

## Patentansprüche

1. Tierdecke (20) zur Anordnung auf oder an einem Tier, die eine Oberseite (22) und eine dem Tier während der Benutzung der Tierdecke (20) zugewandte Unterseite (24) aufweist, wobei die Tierdecke (20) selbst aus einem ersten Material gefertigt ist, **dadurch gekennzeichnet, dass** die Tierdecke (20) vor ihrer ersten Benutzung an ihrer Unterseite (24) eine lösbare Schutzschicht (26) aus einer Folie aufweist, die derart ausgeführt und angeordnet ist, dass diese bei einem Erstkontakt der Tierdecke (20) mit dem Tier zwischen der Tierdecke (20) und dem Tier angeordnet und vor der bestimmungsgemäßen Verwendung der Tierdecke (20) zu entfernen ist.

2. Tierdecke (20) nach Anspruch 1, **dadurch gekennzeichnet, dass** die Verbindung der lösbaren Schutzschicht (26) mit der Tierdecke (20) durch eine Verbindungsart aus der Gruppe Nähverbindung, Klebeverbindung, Klettverbindung oder Klemmverbindung gebildet ist.

3. Tierdecke (20) nach Anspruch 1, **dadurch gekennzeichnet, dass** die Folie als Adhäsionsfolie ausgebildet ist, die klebstofffrei an der Tierdecke (20) haftet.

4. Tierdecke (20) nach einem der Ansprüche 1 bis 2, **dadurch gekennzeichnet, dass** die die lösbare Schutzschicht (26) durch einen Klebstoff derart mit der Tierdecke (20) lösbar verklebt ist, dass die lösbare Schutzschicht (26) rückstandsfrei abziehbar ist.

5. Tierdecke (20) nach Anspruch 2, **dadurch gekennzeichnet, dass** die Verbindung der lösbaren Schutzschicht (26) mit der Tierdecke (20) durch eine Klettverbindung bewirkt wird, wobei Haken der Klettverbindung an der lösbaren Schutzschicht (26) und damit korrespondierende Schlaufen an der Tierdecke (20) angeordnet sind.

6. Tierdecke (20) nach Anspruch 5, **dadurch gekennzeichnet, dass** das erste Material der Tierdecke (20) selbst die Schlaufen ausbildet.

7. Tierdecke (20) nach einem der Ansprüche 1 bis 6, **dadurch gekennzeichnet, dass** die Folie geräuscharm verform- und/oder berührbar ist.

8. Verfahren zur Herstellung, Auslieferung und ersten Anprobe einer Tierdecke (20), die eine Oberseite (22) und eine dem Tier während der Benutzung der Tierdecke (20) zugewandte Unterseite (24) aufweist, wobei die Tierdecke (20) selbst aus einem ersten Material gefertigt ist und vor ihrer ersten Benutzung an ihrer Unterseite (24) eine lösbare Schutzschicht (26) aus einer Folie aufweist, die derart ausgeführt und angeordnet ist, dass diese bei einem Erstkontakt der Tierdecke (20) mit dem Tier zwischen der Tierdecke (20) und dem Tier angeordnet und vor der bestimmungsgemäßen Verwendung der Tierdecke (20) zu entfernen ist, aufweisend die Verfahrensschritte
- Herstellen einer Tierdecke (20) aus einem ersten Material,
- Herstellen einer Schutzschicht (26) aus einer Folie,
- Lösbares Befestigen der Schutzschicht (26) an einer dem Tier während der Benutzung der Tierdecke (20) zugewandten Unterseite (24) der Tierdecke,
- Ausliefern der Tierdecke (20) an einen Kunden,
- Auflegen der Tierdecke (20) auf das Tier, wobei die Schutzschicht (26) zwischen der Tierdecke (20) und dem Tier angeordnet ist,
- Abnehmen der Tierdecke (20) vom Tier,
dann entweder
- Lösen der Schutzschicht (26) von der Tierdecke (20) und bestimmungsgemäße Benutzung der Tierdecke (20) mit dem Tier, oder
- Rückgabe der Tierdecke (20) an den Hersteller oder Händler der Tierdecke (20) vor dem Lösen der Schutzschicht (26).

9. Verfahren nach Anspruch 8, **dadurch gekennzeichnet, dass** nach der Rückgabe der Tierdecke (20) an den Hersteller oder Händler der Tierdecke (20) vor dem Lösen der Schutzschicht (26) das Lösen der Schutzschicht (26) von der Tierdecke (20) beim Hersteller und ein erneutes lösbares Befestigen einer neuen Schutzschicht (26) an einer dem Tier während der Benutzung der Tierdecke (20) zugewandte Unterseite (24) erfolgt und die Tierdecke anschließend erneut an einen Kunden ausgeliefert wird.

10. Verwendung einer Tierdecke (20) zur Anordnung bei der ersten Anprobe auf oder an einem Tier, wobei
- die Tierdecke (20) eine Oberseite (22) und eine dem Tier während der Anprobe der Tierdecke (20) zugewandte Unterseite (24) aufweist,
- die Tierdecke (20) selbst aus einem ersten Material gefertigt ist und vor der ersten Anprobe an ihrer Unterseite (24) eine lösbare Schutzschicht (26) aus einer Folie aufweist, die derart ausgeführt und angeordnet ist, dass diese bei der ersten Anprobe der Tierdecke (20) mit dem Tier zwischen der Tierdecke (20) und dem Tier angeordnet ist,
- die Schutzschicht (26) nach der ersten Anprobe und vor der bestimmungsgemäßen weiteren Verwendung der Tierdecke (20) auf oder an einem Tier entfernt wird.

## Claims

1. An animal blanket (20) for placement on or at an animal, having an upper side (22) and a lower side (24) facing the animal during use of the animal blanket (20), wherein the animal blanket (20) itself is made of a first material **characterized in that** before its first use, the animal blanket (20) has a detachable protective layer (26) made of a film on its lower side (24), which is designed and arranged in such a manner that it is positioned between the animal blanket (20) and the animal upon initial contact with the animal and is to be removed before the intended use of the animal blanket (20).

2. The animal blanket (20) according to Claim 1, **characterized in that** the connection of the detachable protective layer (26) with the animal blanket (20) is formed by a type of connection from the group consisting of sewing connection, adhesive connection, hook-and-loop connection or clamping connection.

3. The animal blanket (20) according to Claim 1, **characterized in that** the film is configured as an adhesive film which adheres to the animal blanket (20) without adhesive.

4. The animal blanket (20) according to one of Claims 1 to 2, **characterized in that** the detachable protective layer (26) is detachably bonded to the animal blanket (20) by an adhesive in such a manner that the detachable protective layer (26) can be peeled off without any residue.

5. The animal blanket (20) according to Claim 2, **characterized in that** the connection of the detachable protective layer (26) to the animal blanket (20) is effected by a hook-and-loop connection, wherein hooks of the hook-and-loop connection are arranged on the detachable protective layer (26) and corresponding loops are thus arranged on the animal blanket (20).

6. The animal blanket (20) according to Claim 5, **characterized in that** the first material of the animal blanket (20) itself forms the loops.

7. The animal blanket (20) according to one of Claims 1 to 6, **characterized in that** the film is deformable and/or touchable with low noise.

8. A method for manufacturing, supplying and first fitting an animal blanket (20) which comprises an upper side (22) and a lower side (24) facing the animal blanket (20) during use, wherein the animal blanket (20) itself is made of a first material and has a detachable protective layer (26) made of a film on its lower side (24) before its first use, which is designed and arranged in such a manner that this is arranged between the animal blanket (20) and the animal upon first contact of the animal blanket (20) with the animal and should be removed before the intended use of the animal blanket (20), comprising the method steps
- producing an animal blanket (20) from a first material,
- producing a protective layer (26) from a film,
- detachable attachment of the protective layer (26) to a lower side (24) of the animal blanket facing the animal during use of the animal blanket (20),
- supplying the animal blanket (20) to a customer,
- placing the animal blanket (20) on the animal, wherein the protective layer (26) is arranged between the animal blanket (20) and the animal,
- removing the animal blanket (20) from the animal,
then either
- detaching the protective layer (26) from the animal blanket (20) and use of the animal blanket (20) with the animal as intended or
- returning the animal blanket (20) to the manufacturer or dealer of the animal blanket (20) before detaching the protective layer (26).

9. The method according to Claim 8, **characterized in that** after return of the animal blanket (20) to the manufacturer or dealer of the animal blanket (20) before detaching the protective layer (26), detachment of the protective layer (26) from the animal blanket (20) and a renewed detachable attachment of a new protective layer (26) to a lower side (24) facing the animal during use of the animal blanket (20) takes place at the manufacturer and the animal blanket is then supplied anew to a customer.

10. Use of an animal blanket (20) for placement on or at an animal during a first fitting, wherein
- the animal blanket (20) has an upper side (22) and a lower side (24) facing the animal during the fitting of the animal blanket (20),
- the animal blanket (20) itself is made of a first material and before the first fitting has a detachable protective layer (26) made of a film on its lower side (24) which is designed and arranged in such a manner that during the first fitting of the animal blanket (20) with the animal this is arranged between the animal blanket (20) and the animal,
- after the first fitting and before the intended further use of the animal blanket (20) on or at an animal the protective layer (26) is removed.

## Revendications

1. Couverture pour animaux (20), destinée à être placée sur ou sur le dessus d'un animal, qui comporte une face supérieure (22) et une face inférieure (24) qui est dirigée vers l'animal pendant l'utilisation de la couverture pour animaux (20), la couverture pour animaux (20) proprement dite étant fabriquée en une première matière, **caractérisée en ce qu'**avant sa première utilisation, la couverture pour animaux (20) comporte sur sa face inférieure (24) une couche protectrice (26) désolidarisable en un film, qui est réalisée et placée de sorte que lors du premier contact de la couverture pour animaux (20) avec l'animal, elle soit placée entre la couverture pour animaux (20) et l'animal et qu'elle doive être retirée avant l'utilisation conforme à sa vocation de la couverture pour animaux (20).

2. Couverture pour animaux (20) selon la revendication 1, **caractérisée en ce que** l'assemblage de la couche protectrice (26) désolidarisable avec la couverture pour animaux (20) est constitué par un type d'assemblage du groupe : assemblage par couture, assemblage par collage, assemblage autoagrippant ou assemblage par serrage.

3. Couverture pour animaux (20) selon la revendication 1, **caractérisée en ce que** le film est conçu sous la forme d'un film adhérent qui adhère sans agent adhésif à la couverture pour animaux (20).

4. Couverture pour animaux (20) selon l'une quelconque des revendications 1 à 2, **caractérisée en ce que** la couche protectrice (26) désolidarisable est collée de manière désolidarisable par un agent adhésif avec la couverture pour animaux (20), de telle sorte que la couche protectrice (26) désolidarisable puisse se retirer sans résidu.

5. Couverture pour animaux (20) selon la revendication 2, **caractérisée en ce que** l'assemblage de la couche protectrice (26) désolidarisable avec la couverture pour animaux (20) est assuré par une liaison autoagrippante, des crochets de l'assemblage autoagrippant étant placés sur la couche protectrice (26) désolidarisable et des boucles correspondant avec ceux-ci étant placées sur la couverture pour animaux (20).

6. Couverture pour animaux (20) selon la revendication 5, **caractérisée en ce que** la première matière de la couverture pour animaux (20) constitue elle-même les boucles.

7. Couverture pour animaux (20) selon l'une quelconque des revendications 1 à 6, **caractérisée en ce que** le film peut se déformer et/ou se toucher de manière silencieuse.

8. Procédé de fabrication, de livraison et de premier essayage d'une couverture pour animaux (20), qui comporte une face supérieure (22) et une face inférieure (24) qui est dirigée vers l'animal pendant l'utilisation de la couverture pour animaux (20), la couverture pour animaux (20) proprement dite étant fabriquée en une première matière et avant sa première utilisation, comportant sur sa face inférieure (24) une couche protectrice (26) désolidarisable en un film, qui est réalisée et placée de sorte que lors du premier contact de la couverture pour animaux (20) avec l'animal, elle soit placée entre la couverture pour animaux (20) et l'animal et qu'elle doive être retirée avant l'utilisation conforme à sa vocation de la couverture pour animaux (20), comportant les étapes de procédé consistant à :
- fabriquer une couverture pour animaux (20) en une première matière,
- fabriquer une couche protectrice (26) en un film,
- fixer de manière désolidarisable la couche protectrice (26) sur une face inférieure (24) de la couverture pour animal, qui est dirigée vers l'animal pendant l'utilisation de la couverture pour animaux (20),
- livrer la couverture pour animaux (20) à un client,
- poser la couverture pour animaux (20) sur l'animal, la couche protectrice (26) étant placée entre la couverture pour animaux (20) et l'animal,
- retirer la couverture pour animaux (20) de l'animal,
ensuite, soit
- désolidariser la couche protectrice (26) de la couverture pour animaux (20) et utiliser conformément à sa vocation la couverture pour animaux (20) avec l'animal ou
- restituer la couverture pour animaux (20) au fabricant de la couverture pour animaux (20) ou au commerçant, avant de désolidariser la couche protectrice (26).

9. Procédé selon la revendication 8, **caractérisée en ce qu'**après la restitution de la couverture pour animaux (20) au fabricant de la couverture pour animaux (20) ou au commerçant, avant la désolidarisation de la couche protectrice (26) ont lieu la désolidarisation de la couche protectrice (26) de la couverture pour animaux (20) chez le fabricant et une nouvelle fixation désolidarisable d'une nouvelle couche protectrice (26) sur une face inférieure (24) dirigée vers l'animal pendant l'utilisation de la couverture pour animaux (20) et par la suite, la couverture pour animaux est livrée à un nouveau client.

10. Utilisation d'une couverture pour animaux (20) à placer sur un animal lors du premier essayage,
- la couverture pour animaux (20) comportant une face supérieure (22) et une face inférieure (24) qui est dirigée vers l'animal pendant l'essayage de la couverture pour animaux (20),
- la couverture pour animaux (20) proprement dite étant fabriquée en une première matière et avant le premier essayage, comportant sur sa face inférieure (24) une couche protectrice (26) désolidarisable en une film, qui est réalisée et placée de sorte que lors du premier essayage de la couverture pour animaux (20) avec l'animal, elle soit placée entre la couverture pour animaux (20) et l'animal,
- après le premier essayage et avant l'utilisation ultérieure conforme à sa vocation de la couverture pour animaux (20), la couche protectrice (26) étant retirée du dessus ou de l'animal.
